Europäisches Patentamt

European Patent Office

Office européen des brevets

(11) Publication number: **0 086 820**
**B1**

(12) EUROPEAN PATENT SPECIFICATION

(45) Date of publication of patent specification: **15.03.89**

(51) Int. Cl.⁴: **A 61 C 8/00**

(21) Application number: **82902775.4**

(22) Date of filing: **13.08.82** .

(86) International application number:
**PCT/US82/01063**

(87) International publication number:
**WO 83/00616 03.03.83 Gazette 83/06**

(60) **Divisional application 86104373 filed on 29.03.86.**

(54) **DENTAL IMPLANT.**

(30) Priority: **14.08.81 US 303577**

(43) Date of publication of application:
**31.08.83 Bulletin 83/35**

(45) Publication of the grant of the patent:
**15.03.89 Bulletin 89/11**

(84) Designated Contracting States:
**AT BE CH DE FR GB LI LU NL SE**

(56) References cited:
**DE-A-2 600 639**
**DE-A-2 628 029**
**DE-B-1 067 975**
**FR-A-1 030 690**
**FR-A-2 468 352**
**US-A-1 479 508**
**US-A-2 719 522**
**US-A-2 835 033**
**US-A-2 835 035**
**US-A-3 672 058**
**US-A-3 849 887**
**US-A-3 950 850**
**US-A-4 050 157**

(73) Proprietor: **TATUM, O Hilt Jr.**
**One Beach Drive Southeast**
**St. Petersburg, FL 33701 (US)**

(72) Inventor: **TATUM, O Hilt Jr.**
**One Beach Drive Southeast**
**St. Petersburg, FL 33701 (US)**

(74) Representative: **Hallam, Arnold Vincent et al**
**E.N. LEWIS & TAYLOR 144 New Walk**
**Leicester LE1 7JA (GB)**

(56) References cited:
**US-A-4 109 382**
**US-A-4 231 120**
**US-A-4 253 833**
**US-A-4 293 302**
**US-A-4 302 188**

Courier Press, Leamington Spa, England.

## Description

### Technical field

This invention relates to prosthodontic implants for rigidly securing a prosthesis in a natural or a prepared jawbone socket.

### Background art

Presently there exist many types of dental implants deigned to enable a prosthesis such as a crown replacement to be rigidly secured to the jawbone. Probably the most common type of dental implant consists of a threaded pin which is dimensioned to threadably engage the socket of a recently extracted tooth. U.S Patents 3,589,011 and 4,234,309 and German 3,355,916 are illustrative examples of such threaded-type implants. The primary disadvantage to the threaded implants is their tendency to loosen within the socket. The implant then has to be removed and replaced by a larger diameter implant. For obvious reasons, these threaded-type implants have not become widely accepted in the art.

U.S. Patent 2,835,033 discloses another type of implant which is designed to be inserted within the socket or alveolar cavity of a recently extracted tooth. More particularly, this type of implant comprises two posts which are inserted into the socket. A plurality of fins and spacers are alternatively slipped onto the posts extending from the socket, with the length of the spacers determining the distance between adjacent fins. The total number of fins and spacers are selected to achieve the desired height of the implant and correspondingly, the amount by which the implant extends from the socket. The implant is left within the socket for a period of time sufficient to enable the bone structure to grow between the adjacent fins. The prosthesis is then connected to the exposed end of the post. A primary disadvantage to this particular implant is the requirement that the implant be assembled piece by piece into the socket of the extracted tooth. This not only increases the difficulty of installing the implant but also increases the likelihood that one of the component pieces will be aspirated by the patient. Moreover, the numerous separate pieces, each of which must be machined to extreme tolerances, increases the overall cost of manufacture of these dental implants. For these reasons, although this type of implant overcomes many of the disadvantages of a screw-type dental implant, it has not been widely accepted in the trade due to its complexity.

U.S. Patent 4,060,896 discloses a threaded-type dental implant wherein a hardenable material is disposed in the jawbone socket prior to the implant being threaded therein. The purpose of the filler material is to assure that the implant will not loosen within the socket of the extracted tooth. It is anticipated that the material will be compressed into the immediately adjacent area of the jawbone as the implant is threaded into the socket. When the material hardens, the implant will be bonded to the bone structure of the jawbone. It should be noted that the filler material must be composed of a hardenable material which will not be rejected by the body.

U.S. Patent 3,672,058 illustrates another threaded-type dental implant which comprises a self-tapping conical screw. The taper of the self-tapping screw is designed such that the implant will threadably engage the socket of the extracted tooth and the threadably engage the portion of the jawbone located immediately below the socket. The socket may be filled with a hardenable resin prior to installing the implant therein. The resin is selected to increase the resistance to rejection of the implant and to avoid deformations of the jawbone.

It should be appreciated that the primary disadvantage to each of the above-described threaded-type implants is their tendency to loosen within the socket after a relatively short period of time. In order to overcome such a tendency, threaded-type implants such as the one disclosed in U.S. Patent 3,474,537 have been developed which are designed to threadably engage through the lower jawbone such that the head of the implant fits against the underside of the jawbone and the terminal end of the implant extends above the jawbone and the gum tissue for providing support to a prosthesis. The head of the implant comprises a flat configuration with one or more holes extending obliquely therethrough. A threaded fastener, such as a screw, is then provided for insertion through the oblique holes to threadably engage the lower portion of the lower jawbone thereby preventing rotation of the implant. Unfortunately, this type of implant can only be utilized when securing a prosthesis to the lower jawbone, and cannot be used for securing a prosthesis to the upper jawbone. Further, a relatively tedious surgical procedure is necessary to properly install the implant. FR—A—2,468,352 discloses an endo-cellular and endo-osseous dental implant comprising a cylindrical metal support at the lower end of which is a pod formed of two or more plates vertically spaced in differing planes. The pod is intended to be positioned, in part, in a tooth socket. Part of the pod forms a metal mass which secures in the base of the socket. The upper part of the support carries retaining ribs and stabilizers whose contour is homothetic in transverse cross section. The upper part of the support has means for connecting a prosthesis.

The present invention seeks to provide a dental implant which provides an improvement which is a significant contribution to the advancement of the dental implant art.

Accordingly, the present invention provides a dental implant for supporting a prosthesis, comprising a post; a plurality of fins extending transversely of said post and being spaced along the length of said post; a boss connected to the proximal end of said post; a support cone or cylinder for supporting a prosthesis; and means for connecting said support cone or cylinder to said boss, characterised in that said fins are of substantially planar configuration, are in suitably parallel relation to one another and extend obliquely from said post. A first preferred embodiment of dental implant comprises a post having a plurality of fins disposed along the length of the post the size of which fins progressively decreases from the proximal end of the post to the distal end of the post to create a tapered configuration of the dental implant. A boss is integrally formed at the proximal end of the post for threadably receiving a support cone corresponding in shape to a normal tooth preparation which is accomplished prior to crown placement. Alternatively, the boss defines a socket for the reception of a correspondingly shaped plug disposed on the support cone. The boss has a circumferential sleeve of ceramic material. During use, the dental implant is inserted within the socket of a recently extracted tooth. The dental implant is then left in place for a period of time sufficient to allow the bone structure of the jawbone to grow between adjacent fins. A cap screw may be threaded into the boss to prevent matter from entering into and contaminating the threads in the boss. After the dental implant becomes rigidly secured into the bone structure of the jawbone, the cap screw is unthreaded from the boss and a support cone is then threaded into the boss. The support cone includes a shape substantially similar to a normal tooth preparation. The prosthesis, such as a crown, is then secured to the support cone by an adhesive or the like.

The preferred form of dental implant does not threadably engage the socket or alveolar of the extracted tooth, but rather is inserted into the socket and allowed to remain therein for a period of time until the bone structure or spongy medullary of the jawbone grows about the implant thereby rigidly securing the implant in the jawbone. The implant has an elongated design with a narrow width for insertion into an artificially created hole in the jawbone and is particularly suitable to be inserted into an artificially created hole in the posterior maxilla to elevate the bony floor of the maxillary sinus thereby creating an equate receptor site in the bone when naturally none existed.

Brief description of the drawings

The present invention is further described hereinafter by way of example with reference to the accompanying drawings, in which:

Fig. 1 is a partial perspective view of a first embodiment of a dental implant showing a plurality of fins extending obliquely to the center post;

Fig. 1A is a side view of the upper portion of the dental implant of Fig. 1. partially broken away for showing the interior threads of the boss to which a support cone is connected;

Fig. 2 is a bottom view of a modified form of dental implant;

Fig. 3 is a top view of Fig. 1A.

Fig. 3A is a side view of the first embodiment of the present invention partially broken away to show the interior threads of the boss and to show the circumferential sleeve;

Fig. 3B is a side view similar to Fig. 3A showing a crown located adjacent the circumferential sleeve;

Fig. 3C is a top plan view of Fig. 3A;

Fig. 3D is a side view of an alternative means for securing the support cone to the boss partially broken away to show the plug and socket means;

Fig. 4 is a side view of a modified dental implant; and

Fig. 5 is a side view of the dental implant shown in Fig. 1 when sited in the anterior maxilla. Similar reference characters refer to similar parts throughout the several views of the drawings.

Best mode for carrying out the invention

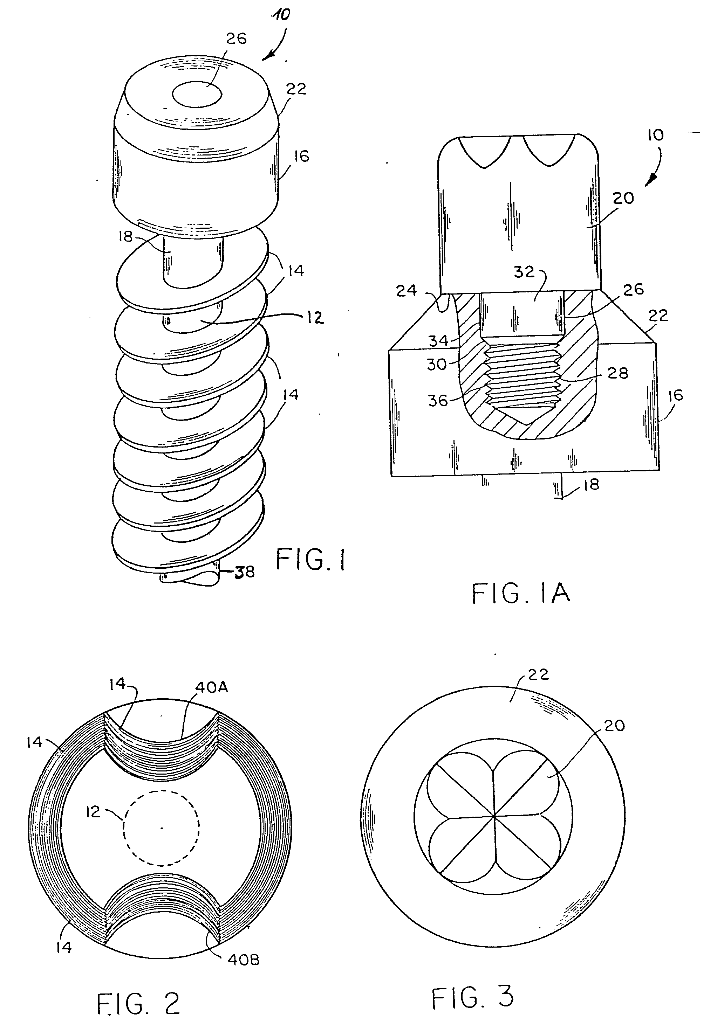

Fig. 1 is a side view of one embodiment of the dental implant 10 of the invention. This embodiment of the dental implant 10 comprises a central post 12 having a plurality of fins 14 extending transversely therefrom and obliquely to the central post. Preferably the fins 14 are equally spaced along the longitudinal length of the post 12 and are integrally formed with the post 12. A boss 16 is integrally formed at the proximal end 18 of the post 12. The boss 16 threadably receives a support cone or support cylinder to which the prosthesis, such as a crown, is connected.

As particularly shown in Fig. 1A, the upper corner 22 of boss 16 is chamfered such that the diameter of the upper surface 24 of boss 16 is substantially equal to the diameter of the support cone 20. A counterbore 26 is axially disposed within the upper surface 24 of boss 16. A threaded hole 28 extends concentrically from the bottom of the counterbore 26 into a substantial length of the boss 16. Preferably the diameter of counterbore 26 is appreciably greater than the diameter of the threaded hole 28 to provide a chamfered seat 30 at the junction thereof. The support cone 20 comprises a stud 32 extending axially from the bottom thereof. The stud 32 comprises a shank portion 34 and a threaded portion 36. Preferably the length of the shank portion 34 is substantially equal to the depth of the counterbore 26 such that the end of the shank portion 34 seats against the chamfered seat 30 of the boss 16 when the support cone 20 is threaded into the threaded hole 28. Further, the exposed end of the support cone 20 preferably comprises a shape corresponding to a normal tooth preparation which is accomplished prior to crown placement.

As noted earlier, the fins 14 are integrally formed with the post 12 and extend transversely of the post outward therefrom. As shown in Fig. 1 each fin 14 comprises a substantially flat circular configuration. Preferably, fins 14 include a circular cross-sectional configuration angularly disposed about the central post 12.

Figure 2 is a bottom view of a modified form of implant in which the sizes of each of the fins 14 progressively decrease from the proximal end 18 of post 12 to the distal end of the post 12 such that the overall diameter of the post 12 and fins 14 combination tapers downwardly from the proximal end 18 to the distal end of post 12. Preferably the taper of the dental implant 10 is designed to correspond to the taper of the socket from which the tooth was extracted. As shown in Fig. 2, a keyway 40A and 40B is cut within opposing sides of each of the fins 14. Each keyway 40A and 40B is semi-circularly shaped and is disposed in a substantial portion of the fin 14. It is noted that the first fin 14 located at the proximal end 18 of post 12 need not include the keyways 40A and 40B.

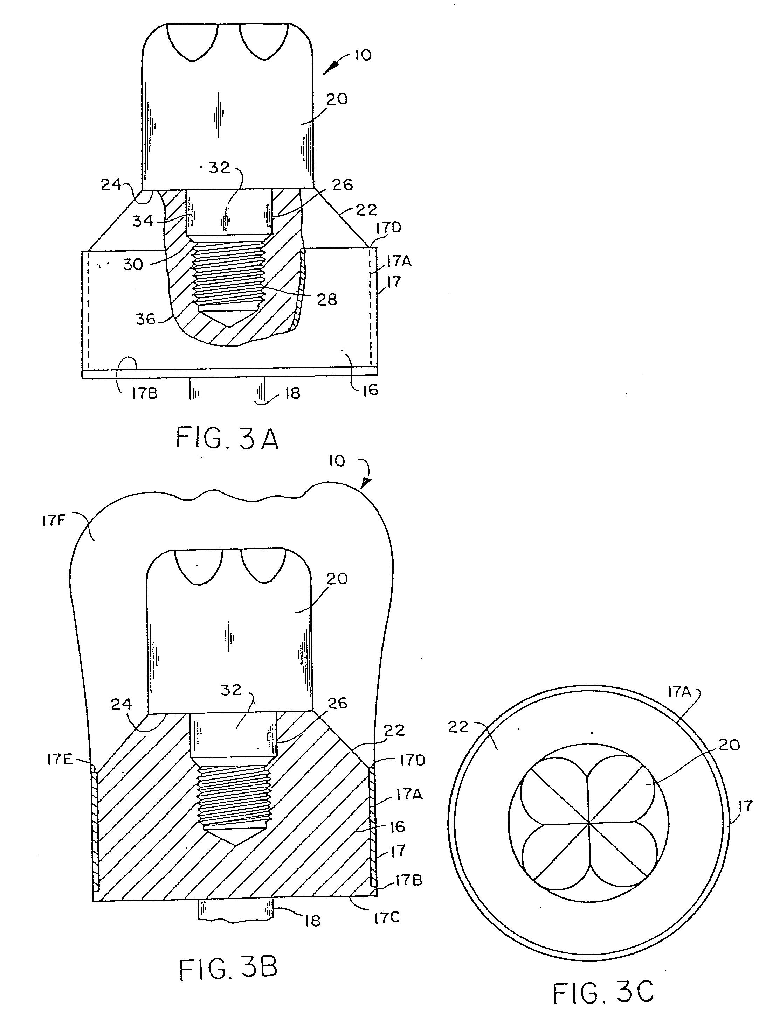

Figs. 3A, 3B and 3C illustrate a circumferential sleeve 17 surrounding the sidewall of the boss 16. The sleeve 17 lies adjacent to the sidewall 17A of boss 16. The lower edge of sleeve 17 abuts against a circumferential ledge 17B disposed near the bottom surface 17C of boss 16. The upper edge 17D of the sleeve 17 is disposed adjacent the lower edge of the chamfered upper corner 22 of the boss 16 where the upper corner 22 joins the sidewall 17A of the boss.

The upper edge 17D abuts against the outer lower circumferential edge 17E of a crown 17F. The circumferential sleeve 17 may be of a ceramic material such as aluminum oxide. The sleeve 17 may be fastened to the sidewall 17A of the boss 16 by mechanical means such as by suitable cement or may be deposited thereon by sputtering or any other coating process.

As shown in Fig. 3B, the lower outer circumferential edge 17B of the crown 17F abuts against the upper edge 17D of the sleeve 17 thus providing a non-metallic outer surface for contact with the adjacent gingival mucosa membrane.

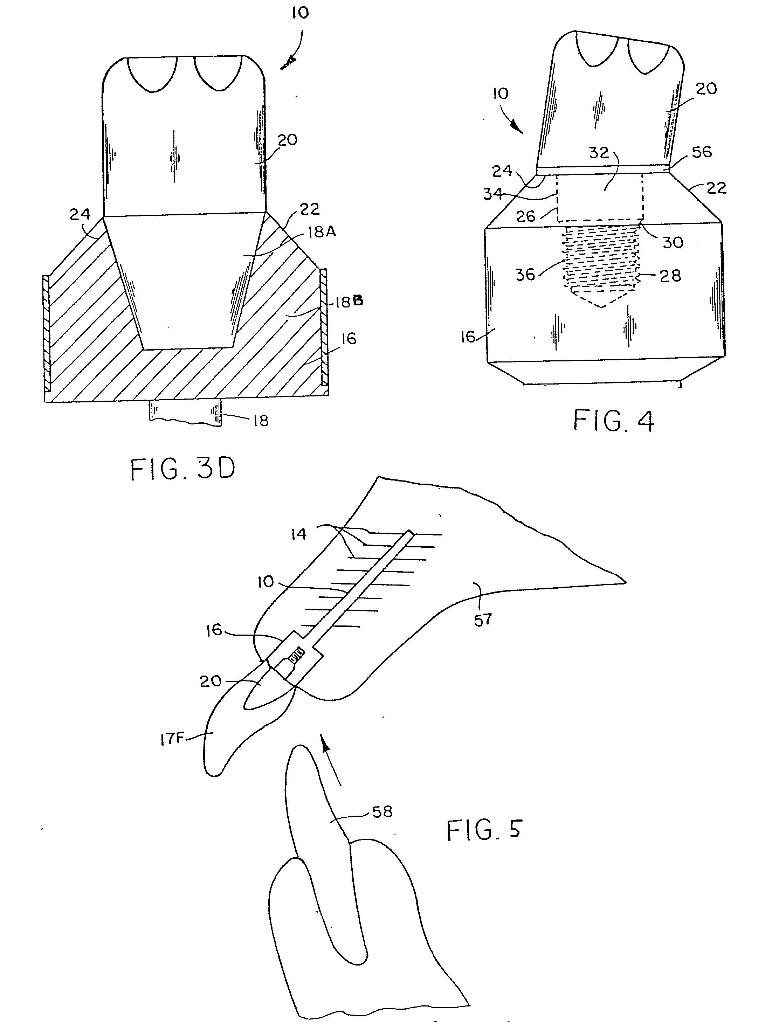

Fig. 3D shows an alternative means for connecting the support cone 20 to the boss 16 and includes a tapered plug 18A which is received by a correspondingly tapered socket 18B defined by the boss 16. The plug 18A is of conical configuration such that it forms an interference fit with the socket 18B similar to the manner in which a violin peg forms an interference fit with the pegbox on the neck of a violin.

By this alternative means of securing the support cone to the boss 16, the support cone can be secured at any rotational position relative to the boss. The plug 18A may be centered within the socket 18B.

It should be appreciated that each of the above described dental implants 10 are designed to be inserted within a socket of a recently extracted tooth. It should be understood however, that the dental implant 10 may alternatively be used for insertion into an artifically created socket having a configuration similar to the dental implant 10. After insertion within the socket, the dental implant 10 is left in place for a period of time of approximately two months during which the surrounding bony structure will grow between the fins 14 thereby rigidly securing the dental implant 10 within the socket. It is noted that a cap screw may be threaded into the threaded hole 28 of boss 16 to prevent matter from entering into and contaminating the counterbore 26 in the threaded hole 28 during this two month period. When the dental implant 10 becomes rigidly secured in the socket, the cap screw is removed and the support cone 20 is then inserted in position into the boss 16. Preferably the threaded hole 28 and the threaded portion 36 of the stud 32 comprise left-handed threads which will not loosen but rather tighten when subjected to any grinding procedures by the dentist. A crown or other prosthesis is then rigidly connected to the support cone 20 by an adhesive or the like.

It is noted that in some instances it may be desirable to position the support cone 20 at an angle with respect to the axis of the boss 16. Accordingly, Fig. 4 illustrates a means by which this may be accomplished. Specifically, the tilted relationship of the support cone 20 may be accomplished by angling the stud 32 with respect to the axis of the support cone 20. When the support cone 20 is threaded into boss 16, the support cone 20, when seated against the upper surface 24 of the boss 16 will be tilted at an acute angle. The rotational position of this angle of tilt may be varied by incorporating a washer 56 between the support cone 20 and the boss 16 with the thickness of the washer 56 in proportion to the slope of the threads of the threaded portion 36 determining the rotational position of the angle of tilt. Thus, the rotational position of the tilt with respect to the dental implant 10 is determined by merely selecting a washer 56 having an appropriate thickness with respect to the threads of the threaded portion 36. It is pointed out that this same means for varying the rotational position of tilt of the support cone 20 may also be easily used in conjunction with the embodiment of the dental implant 10 shown in Figs. 1 and 2.

Fig. 5 illustrates one of the applications of the dental implant shown in Fig. 1. The upper palate is generally designated 57. The dental implant 10 having oblique fins 14 is disposed in the socket or alveolar of the anterior maxilla or forward portion of the upper jawbone. The fins 14 are disposed at an angle of 30 degrees relative to the central post 12 so as to resist the loading from the lower tooth generally designated 58 as it moves upwards as indicated by the arrow. A crown 17F is shown mounted upon the support cone 20 which is in turn rigidly secured by a threaded stud and corresponding threaded bore defined by boss 16.

In use of the dental implant as described hereinbefore, the dental implant 10 is inserted into the alveolar or socket of an extracted tooth. Unlike the prior art devices, the dental implant of the present invention is not screwed or cemented into the spongy bone walls of the alveolar cavity but rather the spongy bone grows around the fins 14 and firmly anchors the fins within the alveolar cavity. In practice, after two months from implantation, the dental implant is sufficiently anchored to the jawbone to permit the support cone 20 to be threadably secured to the boss 16. During the period of two months while the spongy bone or medulla are growing around the fins, a screw is threaded into the threaded bore of the boss 16 to inhibit the ingress of deleterious matter into the threaded hole 28.

The dental implant shown in Fig. 1 is particularly suited for use in the alveolar cavity of the maxilla or upper jawbone but may equally find usage as a prosthodontic device for the mandible or lower jawbone.

As the implant device of the present invention is machined from a solid piece of metal, there is no need to assembly the fins to the post as has been the case in some prior art implant devices.

The implant devices of the present invention are primarily intended for use in an artificially created site using conventional site fitting tools which will allow the preparation of the bony sites by using techniques of bone expansion to create sites which are suitable in shape to receive the implants.

The provision of a circumferential sleeve 17 around the sidewalls of the boss 16 creates a smooth non-metallic continuation of the outer surface of the crown 17F. This facilitates stabilization of the gingival mucosa or gum tissue relative to the dental implant.

The implants shown in Figs. 1—5 have a diameter of .35 centimeters to .8 centimeters and a height of .2 centimeters to 1.8 centimeters. The washers or shims 56 are of a thickness such they correspond with quarter, half, and three-quarter turns of the support cone respectively.

The present disclosure includes that contained in the appended claims as well as that of the foregoing description. Although this invention has been described in its preferred form with a certain degree of particularity, it is understood that the present disclosure of the preferred form has been made only by way of example and that numerous changes in the details of construction and the combination and arrangement of parts may be resorted to without departing from the scope of the invention as defined in the appended claims.

**Claims**

1. A dental implant (10) for supporting a prosthesis comprising: a post (12); a plurality of fins (14) extending transversely of said post (12) and being spaced along the length of said post; a boss (16) connected to the proximal end (18) of said post (12); a support cone (20) or support cylinder for supporting a prosthesis; and means (28, 32) for connecting said support cone or cylinder to said boss, characterised in that said fins are of substantially planar configuration and are in substantially parallel relation to one another and extend obliquely from said post.

2. A dental implant as claimed in claim 1 wherein a keyway (40A, 40B) is disposed in at least one of said fins (14).

3. A dental implant as claimed in claim 1 or 2 wherein said fins (14) have a disc-shaped configuration.

4. A dental implant as claimed in any of claims 1 to 3 wherein the size of said fins (14) progressively decrease from the proximal end (18) of said post (12) to the distal end (38) to define a tapered configuration.

5. A dental implant as claimed in any of claims 1 to 4 wherein said post (12) is tapered along the longitudinal length thereof such that the overall width of the implant (10) decreases from the proximal end (18) of the post (12) to the distal end (38) thereof for defining a dental implant having a tapered configuration.

6. A dental implant as claimed in any of claims 1 to 5 further comprising
a circumferential sleeve (17) disposed on said boss (16).

7. A dental implant as claimed in claim 6, wherein said sleeve (17) abuts against a circumferential ledge (17B) disposed adjacent a lower edge of a circumferential sidewall (17A) of said boss (16).

8. A dental implant as claimed in claim 7, wherein said sleeve (17) includes an upper edge (17D) adjacent an upper edge of said sidewall (17A).

9. A dental implant as claimed in claim 8, wherein said upper edge (17D) of said sleeve (17) abuts against a lower outer circumferential edge (17E) of a crown (17F).

10. A dental implant as claimed in any of claims 6 to 9, wherein said sleeve (17) is ceramic.

11. A dental implant as claimed in any of claims 6 to 9, wherein said sleeve is aluminium oxide.

12. A dental implant as claimed in any of claims 6 to 11, wherein said sleeve (17) is fastened to said sidewall (17A) by cement.

13. A dental implant as claimed in any of claims 6 to 11, wherein said sleeve (17) is coated onto said sidewall (17A).

14. A dental implant as claimed in any of claims 6 to 9 or 11 wherein said sleeve (17) is coated onto said sidewall (17A) by sputtering.

15. A dental implant as claimed in any of claims 1 to 14 wherein said means for connecting said support cone (20) to said boss (16) comprises:
a stud (32) incorporated with and extending from the bottom of said support cone (20), said stud having a threaded portion (36) connected to said support cone by a shank;
a counterbore (26) in said boss (16) for receivably engaging said shank;
a threaded hole (28) in said boss for threadably engaging said threaded portion (36); and
a washer positioned between said support cone and said boss for changing the rotational angular position of said support cone; wherein said stud (32) is angularly positioned with respect to said support cone (20) such that said support cone is angularly tilted with respect to said boss (16) when threaded thereto.

16. A dental implant as claimed in any of claims 1 to 14 wherein said means for connecting said support cone (20) to said boss (16) comprises:
a plug (18A) integral with said cone (20) and wholly disposed within said boss (16); and
a socket (18B) in said boss (16) for receiving said plug (18A).

**Patentansprüche**

1. Zahnimplantat zur Aufnahme einer Prothese mit einem Pfosten (12), einer Vielzahl von Rippen 14, die sich in Querrichtung zum Pfosten (12) erstrecken und im Abstand voneinander über die Länge des Pfostens verteilt sind, eine mit dem oberen Ende (18) des Pfostens (12) verbundene Verdickung (16), einem Trägerkegel oder -zylinder (20) zur Aufnahme einer Prothese und mit Mitteln zum Verbinden des Trägerkegel oder -zylinders (20) mit der Verdickung, dadurch gekennzeichnet, daß die Rippen (14) im wesentlichen eine ebene Ausbildung aufweisen, sich im wesentlichen parallel zueinander erstrecken und zum Pfosten (12) schräg angeordnet sind.

2. Zahnimplantat nach Anspruch 1, dadurch gekennzeichnet, daß in zumindest einer der Rippen (14) eine Kerbnut (40A, 40B) ausgebildet ist.

3. Zahnimplantat nach Anspruch 1 oder 2, dadurch gekennzeichnet, daß die Rippen (14) eine scheibenförmige Gestalt aufweisen.

4. Zahnimplantat nach einem der Ansprüche 1 bis 3, dadurch gekennzeichnet, daß die Größe der Rippen (14) vom oberen Ende (18) des Pfostens (12) zum unteren Ende (38) progressiv abnimmt, um konische Gestalt zu definieren.

5. Zahnimplantat nach einem der Ansprüche 1 bis 4, dadurch gekennzeichnet, daß der Pfosten (12) in Längsrichtung konisch ausgebildet ist, so daß die Gesamtbreite des Implantats (10) vom oberen Ende (18) des Pfostens (12) zum unteren Ende (38) abnimmt, um ein Zahnimplantat zu definieren, das eine konische Gestalt aufweist.

6. Zahnimplantat nach einem der Ansprüche 1 bis 5, des weiteren gekennzeichnet durch eine Umfangshülse (17), die auf der Verdickung (16) angeordnet ist.

7. Zahnimplantat nach Anspruch 6, dadurch gekennzeichnet, daß die Hülse (17) gegen einen vorspringenden Umfangsabsatz (17B) anschlägt, der einer unteren Kante der Umfangsseitenwand (17A) der Verdickung (16) benachbart angeordnet ist.

8. Zahnimplantat nach Anspruch 7, dadurch gekennzeichnet, daß die Hülse (17) benachbart einem oberen Rand der Seitenwand (17A) eine obere Kante (17D) aufweist.

9. Zahnimplantat nach Anspruch 8, dadurch gekennzeichnet, daß die obere Kante (17D) der Hülse (17) genen eine untere Umfangsrandkante (17E) einer Krone (17F) anliegt.

10. Zahnimplantat nach einem der Ansprüche 6 bis 9, dadurch gekennzeichnet, daß die Hülse (17) aus Keramik besteht.

11. Zahnimplantat nach einem der Ansprüche 6 bis 9, dadurch gekennzeichnet, daß die Hülse (17) aus Aluminiumoxid besteht.

12. Zahnimplantat nach einem der Ansprüche 6 bis 11, dadurch gekennzeichnet, daß die Hülse (17) mittels Zement an der Seitenwand (17A) befestigt ist.

13. Zahnimplantat nach einem der Ansprüche 6 bis 11, dadurch gekennzeichnet, daß die Hülse (17) auf der Seitenwand (17A) als Schicht aufgetragen ist.

14. Zahnimplantat nach einem der Ansprüche 6 bis 9 oder 11, dadurch gekennzeichnet, daß die Hülse (17) auf die Seitenwand (17A) durch Zerstäubung aufgeschichtet wird.

15. Zahnimplantat nach einem der Ansprüche 1 bis 14, dadurch gekennzeichnet, daß die Mittel zum Verbinden des Trägeransatzes (20) mit der Verdickung (16) folgende Merkmale aufweisen:

einen im Trägerkegel (20) verankerten und von dessen Boden abstehenden Stehbolzen (32), der einen über einen Schaft mit dem Trägerkegel verbundenen Gewindeabschnitt (36) aufweist;

eine in der Verdickung (16) ausgebildete Gegenbohrung (26), die mit dem Schaft zusammenwirkt;

eine Gewindebohrung (28) in der Verdickung zum Verschrauben des Gewindeabschnitts (36); und

eine Beilagscheibe, die zwischen dem Trägerkegel (20) und der Verdickung angeordnet ist, um die Drehwinkelposition des Trägerkegels zu ändern, wobei der Stehbolzen (32) bezüglich des Trägerkegels (20) im Winkel angeordnet ist, derart, daß der Trägerkegel bezüglich der Verdickung (16) eine Winkelneigung aufweist, wenn er in diesen eingeschraubt ist.

16. Zahnimplantat nach einem der Ansprüche 1 bis 14, dadurch gekennzeichnet, daß die Mittel zum Verbinden des Trägerkegels (20) mit der Verdickung (16) folgende Merkmale aufweisen:

einen integral mit dem Trägerkegel (20) und vollständig in der Verdickung (16) angeordneten Einsatz (18A); und

einen Sockel (18B) in der Verdickung (16) zur Aufnahme des Einsatzes (18).

**Revendications**

1. Implant dentaire (10) destiné à supporter une prothèse, comprenant: un pivot (12); plusieurs ailettes (14) s'étendant transversalement par rapport au pivot (12) et étant espacées sur la longueur du pivot; une protubérance (16) reliée à l'extrémité proximale (18) du pivot (12); un cône de support (20) ou cylindre de support destiné à supporter une prothèse; et des moyens (28, 32) destinés à relier le cône de support ou cylindre de support sur la protubérance, caractérisé en ce que les ailettes sont de configuration sensiblement plane, sont en relation sensiblement parallèle entre elles et s'étendent obliquement par rapport au pivot.

2. Implant dentaire selon la revendication 1, dans lequel une mortaise (40a, 40b) est disposée dans au moins une des ailettes (14).

3. Implant dentaire selon la revendication 1 ou 2, dans lequel les ailettes (14) ont une configuration discale.

4. Implant dentaire selon l'une quelconque des revendications 1 à 3, dans lequel la dimension des ailettes (14) diminue progressivement à partir de l'extrémité proximale (18) du pivot (12) par rapport à l'extrémité distale (38) pour définir une configuration conique.

5. Implant dentaire selon l'une quelconque des revendications 1 à 4, dans lequel le pivot (12) est rendu conique sur sa longueur longitudinale de telle sorte que la largeur hors-tout de l'implant (10) diminue à partir de l'extrémité proximale (18) du pivot (12) vers sont extrémité distale (38) pour définir un implant dentaire ayant une configuration conique.

6. Implant dentaire selon l'une quelconque des revendications 1 à 5 comprenant de plus une gaine circonférentielle (17) disposée sur la protubérance (16).

7. Implant dentaire selon la revendication 6, dans lequel la gaine (17) vient en butée sur un rebord circonférentiel (17B) disposé de façon contiguë à un bord inférieur d'une paroi latérale circonférentielle (17A) de la protubérance (16).

8. Implant dentaire selon la revendication 7, dans lequel la gaine (17) comprend un bord supérieur (17D) contigu à un bord supérieur de la paroi latérale (17A).

9. Implant dentaire selon la revendication 8, dans lequel le bord supérieur (17D) de la gaine (17) vient en butée contre un bord circonférentiel extérieur inférieur (17E) d'une couronne (17F).

10. Implant dentaire selon l'une quelconque des revendications 6 à 9, dans lequel la gaine (17) est en céramique.

11. Implant dentaire selon l'une quelconque des revendications 6 à 9, dans lequel la gaine est de l'oxyde d'aluminium.

12. Implant dentaire selon l'une quelconque des revendications 6 à 11, dans lequel la gaine (17) est fixée sur la paroi latérale (17A) par un cément.

13. Implant dentaire selon l'une quelconque des revendications 6 à 11, dans lequel la gaine (17) est déposée sur la paroi latérale (17A).

14. Implant dentaire selon l'une quelconque des revendications 6 à 9 ou 11, dans lequel la gaine (17) est déposée sur la paroi latérale (17A) par vaporisation.

15. Implant dentaire selon l'une quelconque des revendications 1 à 14, dans lequel les moyens destinés à relier le cône de support (20) à la protubérance (16) comprennent:

un goujon (32) incorporé dans et s'étendant à partir du fond du cône de support (20), ce goujon présentant une portion filetée (36) raccordée au cône de support par une tige;

un contre-alésage (26) dans la protrubérance (16) destiné au logement de la tige;

un alésage fileté (28) dans la protubérance pour l'engagement vissé dans la portion filetée (36); et

une rondelle positionnée entre le cône de support et la protubérance pour modifier la position angulaire rotationnelle du cône de support; dans lequel la cheville (32) est positionnée angulairement par rapport au cône de support (20) de telle manière que le cône de support se trouve incliné angulairement par rapport à la protubérance (16) lorsqu'il est vissé sur celui-ci.

16. Implant dentaire selon l'une quelconque des revendications 1 à 14, dans lequel des moyens destcnés à relier le cône de support (20) à la protubérance (16) comprennent:

une cheville (18A) solidaire du cône (20) et entièrement logée à l'intérieur de la protubérance (16); et

une douille (18B) dans la protubérance (16) destinée à recevoir la cheville (18A).

EP 0 086 820 B1

FIG. I

FIG. IA

FIG. 2

FIG. 3

1

FIG. 3A

FIG. 3B

FIG. 3C

2

FIG. 3D

FIG. 4

FIG. 5

3